# EUROPEAN PATENT SPECIFICATION

(11) **EP 1 906 386 B1**
(45) Date of publication and mention of the grant of the patent: **11.11.2009**
(21) Application number: 06020644.8
(22) Date of filing: 29.09.2006
(51) Int. Cl.: G10L 15/14, G10L 15/06, G10L 15/04, G10L 15/02

(54) **Using child directed speech to bootstrap a model based speech segmentation and recognition system**
Verwendung von kindesorientierter Sprache zur automatischen Generierung einer Sprachsegmentierung und eines modellbasiereten Spracherkennungssystems
Utilisation de discours adressés à des enfants pour générer une segmentation de discours basée sur un modèle et système de reconnaissance

(43) Date of publication of application: 02.04.2008
(73) Proprietor: Honda Research Institute Europe GmbH, 63073 Offenbach/Main (DE)
(72) Inventor: Brandl, Holger, 01309 Dresden (DE); Joublin, Frank, 63533 Mainhausen (DE)
(74) Representative: Rupp, Christian

(56) References cited:
- US-A- 5 659 662
- US-B1- 6 912 499
- H,. A. MURTHY, T. NAGARAJAN, N. HEMALATHA: "Automatic Segmentation and Labeling of Conitnuous Speech Without Bootstrapping" EUSIPCO, [Online] 2004, XP002410079 Vienna, Austria Retrieved from the Internet: URL:http://lantana.tenet.res.in/Publicatio ns/Speech/eusipco.pdf> [retrieved on 2006-12-01]
- LI MAOKUAN ET AL: "Unlabeled data classification via support vector machines and k -means clustering" COMPUTER GRAPHICS, IMAGING AND VISUALIZATION, 2004. CGIV 2004. PROCEEDINGS. INTERNATIONAL CONFERENCE ON PENANG, MALAYSIA 26-29 JULY 2004, PISCATAWAY, NJ, USA,IEEE, 26 July 2004 (2004-07-26), pages 183-186, XP010716600 ISBN: 0-7695-2178-9
- TUAN PHAM: "Alignment-free sequence comparison with vector quantization and hidden Markov models" BIOINFORMATICS CONFERENCE, 2003. CSB 2003. PROCEEDINGS OF THE 2003 IEEE 11-14 AUG. 2003, PISCATAWAY, NJ, USA,IEEE, 11 August 2003 (2003-08-11), pages 534-535, XP010656532 ISBN: 0-7695-2000-6

## Description

### FIELD OF INVENTION

The present invention relates to a technique which exploits the properties of child directed speech to learn the acoustical structure of speech using distinct models for each unit of speech. The resulting acoustic model may e.g. be used for speech segmentation, syllable detection or speech recognition in multi-modal systems. Inherent to the invention proposed here is a system which is able to recognize and learn the structure of speech, which can find application in automatic speech recognition systems and synthetic speech synthesizing systems.

### TECHNICAL BACKGROUND AND PRIOR ART

Generally it is the aim of any speech recognition research to build systems which automatically acquire the structure and meaning of spoken language. But to this day all common automatic speech recognition (ASR) frameworks are designed to detect predefined words using a predefined grammar. There is the problem that no learning at all is possible with such systems: the underlying models are trained using annotated speech databases in advance and remain fixed during recognition. But although it is clear that human-like speech processing involves learning also during recognition, not too much effort was spent to develop online-learning systems. So far all proposed approaches have failed to propose computational models for speech acquisition.

To enable systems to acquire the meaning of speech in a completely unsupervised manner (as it is the case with the present invention) it is necessary to acquire the acoustic structure of the language first. The reason for that is that to assign meaning to a distinct acoustical event it is necessary to be able to segment this acoustic event in a speech utterance. So learning speech segmentation must (at least to some part) precede the learning of speech semantics. The best segmentation results will be obtained if the model used for segmentation captures as much as possible of the acoustical structure of the language to be segmented. This will be the case if each basic unit of speech is modelled by a distinct model. These basic speech units (SU) may be defined in different ways based on linguistic knowledge. They are chosen as trade-off between a low number of speech unit (SU) models to be estimated and an as much as complete capturing of the acoustical speech structure.

Because the invention results in an acoustic model (AM) which describes the basic speech units contained in the training speech data, at first methods will be described used in known speech recognition systems to generate such models.

### Supervised Acoustic Model Acquisition

In speech processing literature the term Acoustic Model Acquisition (AMA) refers to the process of using annotated speech utterances to estimate the parameters of models for basic speech units (SU), like phonemes or syllables. So far it was sufficient to refer to this approach just as AMA because up to this day no methods to learn the speech unit (SU) models in an unsupervised manner were proposed. To disambiguate between such supervised approaches and the method for unsupervised acoustic model acquisition according to the present invention both approaches will be referred as Supervised AMA and Unsupervised AMA, respectively.

Model training methods strongly depend on the mathematical structure used to model the distinct speech units (SU). Although there are a few attempts to replace them, Hidden Markov Models (HMM) are usually used as speech unit (SU) models. The reason for that is that given an annotated speech-database a bunch of Hidden-Markov-Model (HMM) centric methods exists which may be applied to train the different speech unit (SU) models. Because annotations are only available for pre-recorded speech utterances, model training is restricted to being carried out off-line before the models may be used for online speech recognition tasks. Additionally the methods for the common Hidden-Markov-Model (HMM) training require a large amount of data to estimate the parameters of the speech unit (SU) models and hence are not suitable for online learning.

During recognition the estimated speech unit (SU) models are concatenated to word models using a predefined word-dictionary. The arising word models are subsequently embedded into a large recognition model according to a grammar which defines which word transitions are possible. Using incoming speech the best path through the recognition model is determined which directly leads to a sequence of detected words, i.e. the most likely sequence of speech units (SU).

Beside the restriction to off-line training another problem with supervised AMA occurs from the fact that also with extremely huge (but always finite) amounts of annotated training data it is not possible to model every possible utterance. So given a annotated training database to use for supervised syllable-based AMA, it is always possible to imagine syllables which are not modelled, because of a lack of suitable training data.

### Supervised Speech Segmentation

Besides artificial neural networks which are commonly trained to detect segment onsets and rely on segment- or at least onset-annotated speech databases, the major focus in supervised speech segmentation research is about Hidden-Markov-Model (HMM) related techniques for segment spotting. For that purpose Hidden-Markov-Model (HMM) based keyword-spotting was proposed for speech recognition. Thereby single speech unit (SU) models (a.k.a. keyword models) are commonly embedded into an Hidden-Markov-Model (HMM) with a dedicated filler model inserted in between each model transition. The filler- or garbage-model is designed to model all parts in the processed utterances which are not described by a speech unit (SU) model. Such systems give a high segmentation quality. The single speech unit (SU) models need to be trained in advance using annotated speech data.

To enable systems trained in this fashion to cope with non-restricted spontaneous speech utterances, supervised AMA described above was applied in the last years to larger and larger speech databases for training. The basic idea of such attempts is to avoid the use of the theoretically and practically difficult concept of filler/garbage models. But no matter how much data is used for training, not all speech units (SU) occurring later on during unsupervised recognition/segmentation may be handled by such an approach.

In general the choice of an appropriate filler model is the major drawback of Hidden-Markov-Model (HMM) based segment spotting. Recently very few works were presented which do not rely on filler models for segment spotting. Nevertheless such methods require annotated speech for speech unit (SU) model training.

### Unsupervised Speech Segmentation

Although model-based speech segmentation is shown in literature to be more powerful, model-less approaches have the virtue to work from scratch without any preparatory training. So e.g. simple energy based level-tracking for segment generation is possible by using less than a half dozen predefined parameters. Most unsupervised speech segmentation methods have in common that the speech signal is mapped to a 1-dimensional feature space where minima are used to generate segment boundaries dependent on a given sensitivity threshold.

The reason to be less powerful compared against model-based (and so far supervised) approaches is that the structure of speech is encoded using only a small set of parameters. To be more precise, model-less approaches do not include dedicated models for each basic unit of speech like it is the case for model-based speech processing. Although this is sufficient for some applications like single word voice control interfaces, the segmentation performance is far beyond the need required for segmenting spontaneous speech in a human like manner.

A few basic attempts were drawn using recursive neural network models. After training these models were able to generalize from utterance boundaries to the word boundaries inside of utterances. Although hit:false-alarm ratios of 2.3:1 were achieved with such neural network based methods, it is clear that because of the limited memory capacity these are not suitable for realistic speech segmentation tasks. Additionally all reported ANN based approaches use manually annotated symbolic feature corpora. Because of being restricted to a single speech model such methods fail to generate segmentation results comparable to model based segmentation.

In [MNH04] and [SHNM04] the speech signal to be.transcribed is segmented into syllable-like units by an unsupervised method. Similar segments are then grouped together using an unsupervised clustering technique. For each cluster a dedicated model is derived.

Although the method seems to be appealing it assumes that the set of segments contains all syllables of the language to model. In contrast to the approach according to the present invention this approach does not allow online training. Additionally, it supposes the unsupervised segmentation method to find all syllables. The approach according to the present invention does not make such an overoptimistic assumption and expects only somehow pre-segmented segments to be found by the unsupervised segmentation method. Here, dedicated speech unit (SU) models are used later on to uncover the more embedded speech units.

In [Sa105] unsupervised incremental clustering of feature frames is applied to child directed speech to estimate a set of Gaussian distributions. These are assumed to model the underlying phonetic classes contained in the utterances for training. Although the approach is based on phonetic models, it is perceptually motivated, because no annotations were used. Because of the special clustering scheme it may be applied incrementally, and is therefore quite similar to the method proposed here in the sense of acquiring an acoustic model of speech in an online-capable manner. Actually child directed speech could have been replaced with spontaneous speech, because the analysis/model is based solely on frames rather than segments.

Although such an unsupervised approach seems to be appealing the resulting phonetic models might delineate speech on a too basic level to make real use of it for speech processing. Indeed no properties of speech have been exploited and the investigated problem may be reduced to online-clustering of vectors.

Maokuan, *et al*., "Unlabeled Data Classification via Support Vector Machines and *k-*means Clustering" discloses support vector machines (SVMS), a machine method developed from statistical learning, that was introduced in the early 90's, and led to an explosion of interest in machine learning. However, like most machine learning algorithms they are generally applied using selected training sets classified in advance. With the rapid development of the Internet and telecommunications huge amounts of information has been produced as digital data format and generally the data is unlabeled. It is impossible to classify the data with one's own hand one by one. Therefore, the research on unlabeled data classification has grown. Improvements in databases technology, computing performance and artificial intelligence have contributed to the development of a classifier based on k-means algorithm that is used in the classification of unlabeled data.

Murthy, *et al*., "Automatic Segmentation and Labeling of Continuous Speech without Bootstrapping" discloses an approach for automatically segmenting and transcribing continuous speech signal without the use of manually segmented and labeled speech corpora. The continuous speech signal is first segmented into syllable-like units by considering short-term energy as a magnitude spectrum of some arbitrary signal. Similar syllable segments are then grouped together using an unsupervised and incremental clustering technique. Separate models are generated for each cluster of syllable segments. At this stage, labels are assigned for each group of syllable segments manually. The syllable models of these clusters are then used to transcribe/recognize the continuous speech signal of closed-set speakers as well open-set speakers.

### OBJECT OF THE INVENTION

It is therefore an object of the invention to provide an improved automated method and system for the unsupervised acquisition of an acoustic model.

### SHORT SUMMARY OF THE INVENTION

This object is achieved according to the invention by a method as defined in independent claim 1. Advantageous embodiments are defined in the independent claims.

The idea of the present invention is to combine simple unsupervised and supervised speech segmentation methods to bootstrap a model-based language representation from scratch: As long as there are no models for speech units available the bootstrapping relies solely on unsupervised segmentation to generate training segments for model creation and training. As soon as new models are derived they are used for model-based segment detection to generate additional training segments.

To make such an idea work, the speech database required for training is set to be similar to child-directed speech (CDS) used by parents to communicate with their children during their first years of life.

It is assumed to have a good intelligibility, is spoken with a low speech rate and consists to some amount of single word utterances. These short utterances bounded by marginal breaks may be supposed to often consist of only one syllable. If the system has acquired first models by using solely these monosyllabic training segments provided by the unsupervised speech segmenter a transition to more and more complex training speech is possible.

### BRIEF DESCRIPTION OF THE FIGURES

These and other aspects, features and advantages of the present invention will become more evident, when considering the following detailed description, in connection with the annexed figure in which
- Fig.1: shows a flowchart of a method for acquiring a pool of speech syllable models according to an embodiment of the invention; and
- Fig.2: shows the processing graph according to an embodiment of the invention.

### DETAILED DESCRIPTION OF THE INVENTION

### The choice of the basic speech unit (SU) and its model

The first step to set up a model-based speech processing framework is to choose an appropriate basic unit of speech to be modeled. State of art Hidden-Markov-Model (HMM)-based speech recognizers commonly rely on models for phonemes, wherein a phoneme is a set of speech sounds which is sufficient to distinguish between any two different words of a language. Although only a small set of phonemes (ca. 40) is theoretically sufficient to express each word of a language, it is often necessary to model transitions between phonemes in addition to cope with co-articulatory effects.

For an unsupervised speech acquisition framework the linguistic concept of phonemes is not suitable. To bootstrap an acoustic model-based speech representation in a childlike way it is necessary to employ a more perceptual concept like the syllable. A syllable may be defined as a set of subsequent voiced sounds with optional initial and final consonantal margins. Although a perceptual definition is given here, there are also more linguistic definitions available.

It may be supposed that the idea to use syllables instead of phonemes or other linguistic-perceptual entities as basic acoustic units is already known in the state of the art. But whereas the use of syllables for supervised AMA was motivated mainly to avoid complex multi-phoneme modeling and retain a proper modeling of co-articulation effects, here the use of syllables is crucial to allow unsupervised perceptual-centric speech structure acquisition.

Although Hidden-Markov-Models (HMM) are well suited to be used as mathematical models for the different speech units (SU) the approach described here is not restricted to Hidden-Markov-Models (HMM) like the most ASR frameworks which are somehow designed around the available computational methods for Hidden-Markov-Models (HMM). Indeed every kind of speech unit (SU) model is suitable to be used in the unsupervised AMA framework as long as the model
(1) can be used to spot its modeled speech unit (SU) in a speech stream,
(2) is able to use one or several speech snippets as training segments and
(3) is capable of computing a kind of reconstruction score given a segment of speech.

### The Bootstrapping Process

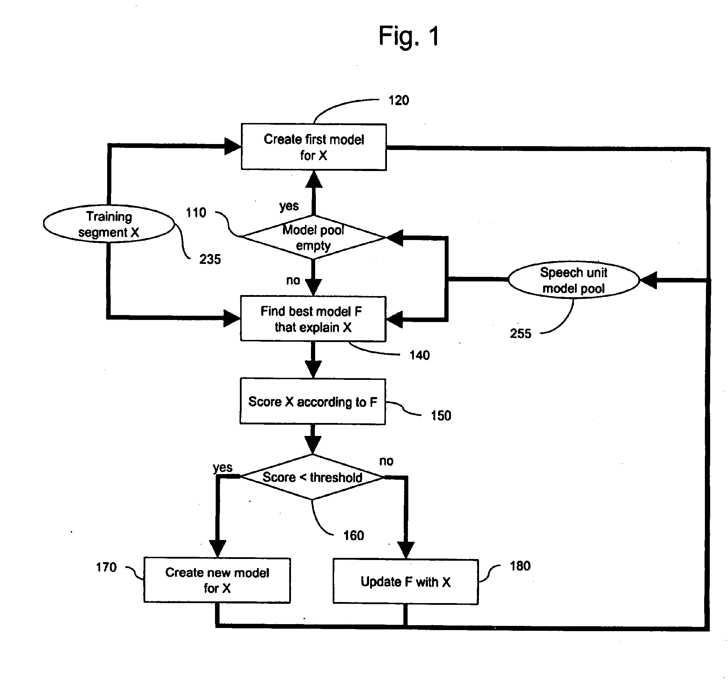

**Figure 1** shows a flowchart of a method for acquiring a pool of speech syllable models according to one embodiment of the invention.

Let X be a segment of speech found using segment spotting or unsupervised speech. In other words, the source of the segment may either be an unsupervised speech segmenter or an already existing speech unit (SU) model which has spotted a representative of itself. In one embodiment of the invention, segments may be generated using an unsupervised energy based speech segmentation approach or a filler-model-free keyword detection method based on Hidden-Markov-Models (HMM).

In step 110 it is decided whether the model pool is empty. If yes, then a first speech syllable model is trained and added to the pool in step 120.

In other words, at first no speech unit (SU) models may be contained in the acoustic model. Incoming speech is analyzed solely by an unsupervised speech segmentation module. Using child directed speech as input it is possible to detect segments of syllable length if they are not too embedded into the speech stream, i.e. if they are easy to segment, i.e. the speech rate is not too high.

These initial training segments may be used to train a first syllable model. Because it may not be assumed that all initial training segments contain the same syllable this model should be thought as a general syllable model and not as a model of a specific syllable.

If the model pool is not empty, then the method branches to step 140, where the model F already existing in the pool P is determined that is most likely to explain the given segment X. Then, in step 150, the determined model F is used to score the segment X.

In step 160 it is determined whether the score is smaller than a predefined threshold. If yes, a new model is created in step 170 and added to the pool. Else, the new training segment X is used in step 180 to improve or to re-estimate the model F.

In other words, let the acoustic model contain at least one speech unit (SU) model. A new training segment X will be processed in a 2-fold way. First the speech unit (SU) model F which best matches the given segment is determined. Given that two cases have to be considered:
1. A confidence measure, which uses F to score X , is lesser than a user defined threshold. In this case the model F seems not to be an appropriate model for X. But because F was found to be the best model for X in the pool a new model for X is created. In one embodiment, this step may comprise using the model parameters of F for initialization. Then, to make the new model to be different of F the segment X may be utilized to perform a first parameter update.
2. The confidence measure exceeds the user defined threshold. The model F seems to be appropriate to model the current segment X, which therefore will be used to improve/re-estimate F.

Given that a specific amount of training segments was used to estimate the parameters of a single syllable model, it may be employed to observe the speech stream. Being attached to the speech stream it is now able to detect segments which contain the same speech unit (SU) than the modeled one. Because model-based detection/segmentation is applied to some more part now, the speech used for training is possible to be less CDS-like than it was required before. It is no longer necessary to assume the segments to be detected by the newly attached speech unit (SU) models to be monosyllabic utterances, as it was necessary when using solely less powerful unsupervised speech segmentation.

The method described above is suited to be used for online speech structure acquisition and analysis: Incoming speech may be analyzed on-the-fly based on the existing speech unit (SU) models and the unsupervised speech segmentation method. The segmentation and recognition results may be used for additional model training and/or external processing.

In other words, the method described above applies trained models to analyze the speech. If a model was successful to detect a realization of itself, the segment information due to the location in the speech stream may be used to generate new training segments. These segments may consist of the segment itself, but also of segments generated by using boundary cues of different segments. Using this procedure incrementally, the system is able to acquire the complete acoustic structure of a language.

In other words, if the first training segments are modeled in the pool, they may be used to generate new segments of continuous speech because the model spotter will recognize these modeled segments and their boundaries in the continuous speech. This will allow the training segment generator to generate new segments of speech. For example, if the system has segmented the words "this", "is", "red" because they were pronounced in child directed speech (separated from each other), then by encountering a fluently spoken sentence like "this is a red cube", the spotter will segment "this", "is" and "read", allowing a segment generator to create new training segments "a" and "cube".

### Model Pool Size Limitation

Given the above procedure to generate training segments in a two-fold way and to use them for model improvements and model pool extension it is clear that the number of syllable models in the unsupervised trained acoustic model will grow monotonous over time. To ensure a meaningful and as much as possible compact acoustic model it is therefore crucial to limit the size of the model pool.

Therefore, in one embodiment of the invention, the model pool may be regulated based on model spotting coverage and model selectivity.

Model spotting coverage describes how well a speech signal can be modeled using the existing model pool. It is 1 if for each occurring SU at least one model becomes active (in terms spotting its representative) or 0 if none of them leads to a SU model activation. For partial coverage it may be between 0 and 1. Based on this measure regulating criteria can be defined to bound the growth of developing models.

Model selectivity describes how sparse the SU pool spotting activity is, i.e. how many of the segment models are active at the same time. The more of them are active the more redundant is the model pool. Ideally, one model is active per time. So model selectivity might define whether to prune some models in order to achieve a less redundant pool. This implicitly increases the differences between distinct speech unit (SU) models. In one embodiment of the invention, a possible realization of model selectivity may be to compute a measure of training segment co-occurrence.

This matrix-valued measure describes for each two syllable models the probability that they will generate a training segment for bootstrapping given the same segment of speech. Such a measure may be computed using long term segmentation activity patterns. If e.g. two syllable models generate training segments for same segments of speech over a long time it is clear that both model the same syllable. Using a threshold such similar models might be pruned or merged based on this co-occurrence measure. Pruning of this kind additionally ensures sparsity of generated segments. To allow pruning only for redundant model pools the pruning threshold might be modified dependent of the current model spotting coverage. Depending on the default threshold the acoustic model might contain models only for broad syllable categories or more specific speech unit (SU) models.

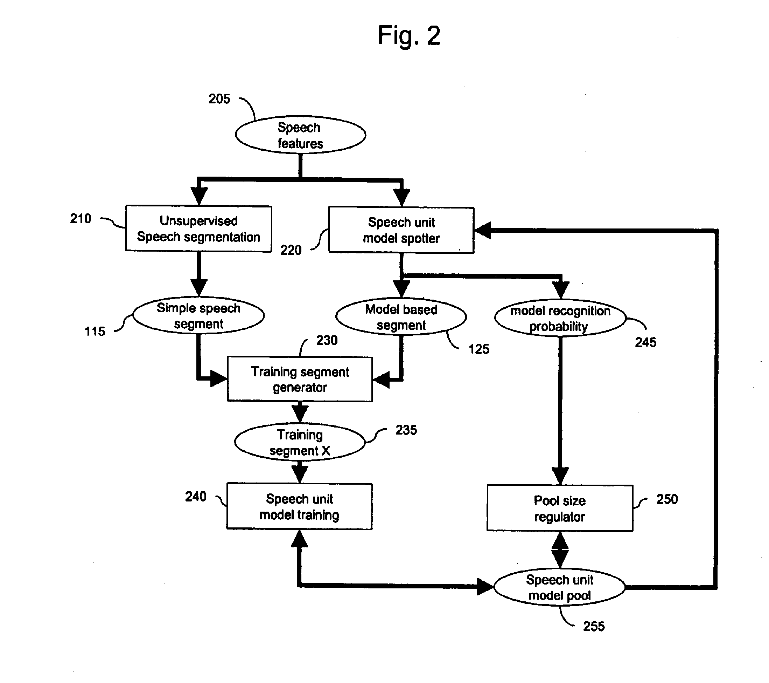

**Figure 2** shows the processing graph of a system for acquiring a pool of speech syllable models according to one embodiment of the invention. Speech features 205 are analyzed by an unsupervised speech segmentation module 210 and a speech unit model spotter 220. The unsupervised speech segmentation module 210 derives a simple speech segment 115 which may be input into a training segment generator 230. The speech unit model spotter 220 derives a model-based segment 125 which may equally be input into the training segment generator 230. Because not crucial for the invention a more detailed feature extraction may be skipped here.

The training segment generator 230 generates training segments 235 which may subsequently be used by a speech unit model training module 240 in order to train speech unit models (cf. figure 1 for detail). The speech unit model training unit outputs trained speech unit models to a speech unit model pool 255. The size of the speech unit model pool 255 may be regulated by a pool size regulator 250, based on a model recognition activity 245 of the speech unit model spotter 220.

### CONCLUSION

A method for speech unit (SU) recognition merged with unsupervised AMA was proposed by combining ideas of unsupervised and supervised speech segmentation.

The approach relies on speech data which is similar to child-directed speech. To enable solely perceptual processing phonemes were skipped in favour of the more perceptual concept of syllables as basic modelling units. Unsupervised speech segmentation was used to generate first training segments for model bootstrapping of syllables which are to some parts pre-segmented in the speech stream. Later on existing speech unit (SU) models may be used to generate training segments for more complex utterances where simple unsupervised speech segmentation fails to generate expedient segments. The number of syllable models is bounded by using model pruning based on a proposed measure of co-occurring segmentation activity.

Compared with supervised AMA the resulting acoustic model will contain only syllable models which are actually required to model the already processed speech utterances. Because the proposed unsupervised AMA approach combines the separate stages for training and recognition into one integrated framework new never seen syllables may be modelled based on their appearance in time. Using supervised AMA this is not possible.

### REFERENCES

[MNH04] Hema A. Murthy, T. Nagarajan, and N. Hemalatha. Automatic segmentation and labeling of continuous speech without bootstrapping. In EUSIPCO, 2004. Poster-presentation.
[Sal05] Giampiero Salvi. Ecological language acquisition via incremental model-based clustering. 2005.
[SHNM04] G.L. Sarada, N. Hemalatha, T. Nagarajan, and Hema A. Murthy.Automatic transcription of continuous speech using unsupervised and incremental training, 2004.Poster-Presentation at InterSpeech2004.

## Claims

1. Method for acquiring a pool of speech syllable models comprising the steps: - finding a training segment using unsupervised speech segmentation or speech unit spotting; - if the model pool is empty, training a first speech syllable model and adding it to the pool (120) - else determining an existing model in the model pool that best matches the given segment (140); using the model to score the new training segment (150); if the score is smaller than a predefined threshold, creating a new model for the training segment and adding it to the pool (170); else using the new training segment to improve or to re-estimate the model (180); - repeating the above steps, **characterized in that** child-directed speech is used as input at least during the acquisition of the first models.

2. Method according to claim 1, wherein the input is analyzed by an unsupervised speech segmentation module and a model spotter module that uses already acquired models for speech unit based segmentation.

3. The method according to claim 1, wherein the step of creating a new model for the training segment comprises using the model parameters of an existing model of the model pool.

4. Method according to any of the preceding claims, further comprising the step of regulating the size of the model pool.

5. Method according to claim 4, wherein the step of regulating the size of the model pool is based on model spotting coverage.

6. Method according to claim 4, wherein the step of regulating the size of the model pool is based on training segment co-occurrence, wherein the measure of training segment co-occurrence is a matrix describing for each two speech syllable models the probability that they will generate a training segment given the same segment of speech.

7. Method according to claim 4, wherein the score is a combined measure of model spotting coverage and of training segment co-occurrence, wherein the measure of training segment co-occurrence is a matrix describing for each two speech syllable models the probability that they will generate a training segment given the same segment of speech.

8. Method according to claim 1, wherein each speech syllable model
- is usable for spotting its modeled speech syllable in a speech stream;
- is able to use one or several speech snippets as training segments; and
- is capable of computing a reconstruction score given a segment of speech.

9. Method according to claim 8, wherein each speech syllable model is a Hidden-Markov-Model (HMM).

10. System for acquiring a pool (P) of speech syllable models, comprising :
- a speech segmentation module;
- a speech unit model spotter;
- a training segment generator; and
- a speech unit model training module,
wherein said training segment generator is adapted to use child-directed speech as input at least during an acquisition of a first model of a model pool.

11. System according to claim 10, further comprising a pool size regulator.

12. Computer software program product, comprising instructions that when executed on a computer, carry out a method according to any of claims 1 to 9.

13. Computer-readable medium, having recorded thereon a software according to claim 12.

## Patentansprüche

1. Verfahren zum Erlangen eines Pools von Sprachsilbenmodellen, welches die Schritte umfasst:
- Finden eines Trainingssegments unter Verwendung einer unbeaufsichtigten Sprachsegmentierung oder Spracheinheitserkennung;
- wenn der Modell-Pool leer ist, Trainieren eines ersten Sprachsilbenmodells und Hinzufügen desselben zu dem Pool (120);
- ansonsten Bestimmen eines existierenden Modells in dem Modell-Pool, welches am besten mit dem gegebenen Segment (140) übereinstimmt unter Verwendung des Modells, um das neue Trainingssegment (150) zu bewerten;
wenn der Wert kleiner als ein vordefinierter Schwellenwert ist, Bilden eines neuen Modells für das Trainingssegment, und Hinzufügen desselben zu dem Pool (170), ansonsten Verwenden des neuen Trainingssegments, um das Modell (180) zu verbessern oder um es neu abzuschätzen;
- Wiederholen der obigen Schritte, **dadurch gekennzeichnet, dass** eine auf Kinder gerichtete Sprache als Eingabe zumindest während des Erlangens der ersten Modelle verwendet wird.

2. Verfahren gemäß Anspruch 1, wobei die Eingabe durch ein nicht überwachtes Sprachsegmentierungsmodul und ein Modellerkennungsmodul analysiert wird, welches bereits erlangte Modelle für eine Spracheinheit basierte Segmentierung verwendet.

3. Verfahren gemäß Anspruch 1, wobei der Schritt des Bildens eines neuen Modells für das Trainingssegment eines existierenden Modells aus dem Modell-Pool ein Verwenden der Modellparameter eines existierenden Modells von dem Modell-Pool umfasst.

4. Verfahren gemäß irgendeinem der vorherigen Ansprüche, weiterhin den Schritt des Regulierens der Größe des Modell-Pools umfassend.

5. Verfahren gemäß Anspruch 4, wobei der Schritt des Regulierens der Größe des Modell-Pools auf einer Modellerkennungsabdeckung basiert.

6. Verfahren gemäß Anspruch 4, wobei der Schritt des Regulierens des Modell-Pools auf einem Trainingssegment-Zusammentreffen basiert, wobei das Maß des Trainingssegment-Zusammentreffens eine Matrix ist, welche für jede zwei Sprachsilbenmodelle die Wahrscheinlichkeit beschreibt, dass sie ein Trainingssegment erzeugen werden, bei gegebenem gleichen Sprachsegment.

7. Verfahren gemäß Anspruch 4, wobei der Wert ein kombiniertes Maß einer Modellerkennungsabdeckung und eines Trainingssegment-Zusammentreffens ist,
wobei das Maß des Trainingssegment-Zusammentreffens eine Matrix ist, welche für jede zwei Sprachsilbenmodelle die Wahrscheinlichkeit beschreibt, dass sie ein Trainingssegment erzeugen werden, bei gegebenem gleichen Sprachsegment.

8. Verfahren gemäß Anspruch 1, wobei jedes Sprachsilbenmodell
- verwendbar zum Erkennen seiner modellierten Sprachsilbe in einem Sprachstrom ist;
- in der Lage ist, eines oder mehrere Sprachschnipsel als Trainingssegmente zu verwenden; und
- in der Lage ist, einen Rekonstruktionswert zu berechnen, bei gegebenen gleichen Sprachsegment.

9. Verfahren gemäß Anspruch 8, wobei jedes Sprachsilbenmodell ein Hidden-Markov-Modell (HMM) ist.

10. System zum Erlangen eines Pools (P) von Sprachsilbenmodellen, umfassend:
- ein Sprachsegmentierungsmodul;
- eine Spracheinheitsmodellerkennung;
- einen Trainingssegmentgenerator; und
- ein Spracheinheitsmodelltrainingsmodul,
wobei der Trainingssegmentgenerator angepasst ist, um auf Kinder gerichtete Sprache als Eingabe zumindest während eines Erlangens eines ersten Modells eines Modell-Pools zu verwenden.

11. System gemäß Anspruch 10, weiterhin einen Poolgrößenregulierer umfassend.

12. Computer-Software-Programmprodukt, Instruktionen umfassend, welche, wenn auf einem Computer ausgeführt, ein Verfahren gemäß irgendeinem der Ansprüche 1 bis 9 ausführen.

13. Computer-lesbares Medium, welches darauf aufgezeichnet eine Software gemäß Anspruch 12 aufweist.

## Revendications

1. Procédé d'acquisition d'une réserve de modèles de syllabes vocales, comprenant les étapes consistant à :
- trouver un segment d'apprentissage utilisant une segmentation de la parole non supervisée ou un repérage d'unité de parole ;
- si la réserve de modèles est vide, apprendre un premier modèle de syllabe vocale et l'ajouter à la réserve (120) ;
- sinon, déterminer un modèle existant dans la réserve de modèles qui correspond le mieux au segment donné (140) ;
- utiliser le modèle pour noter le nouveau segment d'apprentissage (150) ;
- si la note est inférieure à un seuil prédéfini, créer un nouveau modèle pour le segment d'apprentissage et l'ajouter à la réserve (170) ;
- sinon utiliser le nouveau segment d'apprentissage pour améliorer ou réévaluer le modèle (180) ;
- répéter les étapes ci-dessus,
**caractérisé en ce que** le langage enfantin est utilisé en entrée au moins pendant l'acquisition des premiers modèles.

2. Procédé selon la revendication 1, dans lequel l'entrée est analysée par un module de segmentation de la parole non supervisée et un module de repérage de modèle qui utilise des modèles déjà acquis pour une segmentation basée sur des unités de parole.

3. Procédé selon la revendication 1, dans lequel l'étape consistant à créer un nouveau modèle pour le segment d'apprentissage comprend l'utilisation des paramètres de modèle d'un modèle existant de la réserve de modèles.

4. Procédé selon l'une quelconque des revendications précédentes, comprenant en outre l'étape consistant à réguler la taille de la réserve de modèles.

5. Procédé selon la revendication 4, dans lequel l'étape consistant à réguler la taille de la réserve de modèles est basée sur une couverture de repérage de modèle.

6. Procédé selon la revendication 4, dans lequel l'étape consistant à réguler la taille de la réserve de modèles est basée sur une co-occurrence de segments d'apprentissage, dans lequel la mesure de la co-occurrence de segments d'apprentissage est une matrice décrivant pour respectivement deux modèles de syllabe vocale la probabilité qu'ils génèrent un segment d'apprentissage en présence du même segment de parole.

7. Procédé selon la revendication 4, dans lequel la note est une mesure combinée de la couverture de repérage de modèle et de la co-occurrence de segments d'apprentissage, dans lequel la mesure de la co-occurrence de segments d'apprentissage est une matrice décrivant pour respectivement deux modèles de syllabe vocale la probabilité qu'ils génèrent un segment d'apprentissage en présence du même segment de parole.

8. Procédé selon la revendication 1, dans lequel chaque modèle de syllabe vocale
- est utilisable pour repérer sa syllabe vocale modélisée dans un flux de parole ;
- est capable d'utiliser une ou plusieurs bribes de parole en tant que segments d'apprentissage ; et
- est capable de calculer une note de reconstruction en présence d'un segment de parole.

9. Procédé selon la revendication 8, dans lequel chaque modèle de syllabe vocale est un modèle de Markov caché (HMM).

10. Système d'acquisition d'une réserve (P) de modèles de syllabe vocale, comprenant :
- un module de segmentation de la parole ;
- un dispositif de repérage de modèle d'unité de parole ;
- un générateur de segment d'apprentissage ; et
- un module d'apprentissage de modèle d'unité de parole,
dans lequel ledit générateur de segment d'apprentissage est adapté pour utiliser le langage enfantin en entrée au moins pendant une acquisition d'un premier modèle d'une réserve de modèles.

11. Système selon la revendication 10, comprenant en outre un régulateur de taille de réserve.

12. Produit de programme de logiciel informatique, comprenant des instructions qui, lorsqu'elles sont exécutées sur un ordinateur, effectuent un procédé selon l'une quelconque des revendications 1 à 9.

13. Support lisible par ordinateur, sur lequel est enregistré un logiciel selon la revendication 12.
